# DEMANDE DE BREVET EUROPEEN

(11) **EP 2 639 422 A1**
(43) Date de publication de la demande: **18.09.2013**
(21) Numéro de dépôt: 13155559.1
(22) Date de dépôt: 18.02.2013
(51) Int. Cl.: F01N 3/20

(54) **Vehicule automobile equipe d'une cartouche de demarrage d'un dispositif de post-traitement de gaz d'echappement**

(30) Priorité: 13.03.2012 FR 1252259
(71) Demandeur: PEUGEOT CITROËN AUTOMOBILES SA, 78140 Velizy-Villacoublay (FR)
(72) Inventeur: Artault, Mathieu, 92700 Colombes (FR); Jumel, Guillaume, 78290 Croissy sur Seine (FR)

(57) **Abrégé**

L'invention a pour objet un véhicule automobile (1) équipé d'une boucle de climatisation (6) et d'une cartouche de démarrage (14) constitutive d'un dispositif (9) de post-traitement de gaz d'échappement (8). La cartouche de démarrage (14) comporte une surface de contact (25) avec une canalisation froide (24) constitutive de la boucle de climatisation (6).

## Description

L'invention relève du domaine des véhicules automobiles, et plus particulièrement du domaine des véhicules automobiles équipés d'un dispositif de stockage d'un composé ammoniaqué utilisé pour réduire des oxydes d'azote véhiculés par des gaz d'échappement. Elle a pour objet un tel véhicule automobile.

Le document WO2011/113593 décrit une cartouche de stockage d'un composé ammoniaqué qui est apte à libérer de l'ammoniac lorsque le composé ammoniaqué est chauffé par l'intermédiaire d'une résistance. Une capsule enveloppe la cartouche de stockage en ménageant un espace interne entre la capsule et la cartouche de stockage. L'espace interne permet un passage d'un flux d'air qui est mis en circulation par l'intermédiaire d'un ventilateur équipant un orifice d'admission d'air ménagé à travers la capsule. Cette dernière est aussi pourvue d'un orifice d'évacuation qui est équipé d'un volet. Ce dernier est mobile entre une position d'ouverture dans laquelle le volet autorise une évacuation du flux d'air hors de la capsule et une position de fermeture dans laquelle le volet interdit une telle évacuation.

Lors d'une étape de libération d'ammoniac, la cartouche est chauffée par la résistance, le ventilateur est à l'arrêt et le volet est en position de fermeture. Il en découle une libération d'ammoniac qui est ensuite introduit par l'intermédiaire d'un injecteur à l'intérieur d'une ligne d'échappement équipant le véhicule automobile. L'ammoniac est destiné à participer à une réaction de réduction d'oxydes d'azote véhiculés par des gaz d'échappement qui sont produits par un moteur à combustion interne équipant le véhicule automobile.

Lors d'une étape de recharge en ammoniac de la cartouche de stockage, la résistance n'est pas mise en oeuvre, le ventilateur est mis en marche et le volet est en position d'ouverture. Dans ce cas-là, de l'ammoniac est libéré par une cartouche de réserve qui est en relation avec l'espace interne de la capsule.

Lors de l'étape de recharge en ammoniac de la cartouche de stockage, une réaction d'adsorption d'ammoniac se produit à l'intérieur de cette dernière. Une telle réaction d'adsorption est une réaction lente et exothermique. Il en découle qu'une telle réaction d'adsorption est difficile à mettre en oeuvre lorsque le véhicule automobile effectue des trajets courts au cours desquels la cartouche de réserve n'a pas le temps d'être suffisamment chauffée pour libérer de l'ammoniac destiné à être adsorbé par la cartouche de stockage. De plus, une étape de recharge est très consommatrice d'énergie électrique pour chauffer la cartouche de réserve, il est ainsi courant de consommer 250W lors d'une période de chauffe comprise entre 600 s et 2000 s. Enfin, lors de l'étape de recharge, l'injecteur d'ammoniac à l'intérieur de la ligne d'échappement est inhibé pour permettre la charge en ammoniac de la cartouche de stockage. Il en découle une libération excessive d'oxydes d'azote vers un environnement extérieur au véhicule automobile, ce qu'il est préférable d'éviter.

Le but de la présente invention est de proposer un véhicule automobile qui soit peu polluant à partir d'une mise en oeuvre rapide et efficace d'une cartouche de démarrage constitutive d'un dispositif de post-traitement de gaz d'échappement produits par un moteur à combustion interne équipant le véhicule automobile.

Un véhicule automobile de la présente invention est un véhicule automobile équipé d'une boucle de climatisation et d'une cartouche de démarrage constitutive d'un dispositif de post-traitement de gaz d'échappement.

Selon la présente invention, la cartouche de démarrage comporte une surface de contact avec une canalisation froide constitutive de la boucle de climatisation.

La cartouche de démarrage est par exemple placée sous un compartiment moteur du véhicule automobile.

La cartouche de démarrage est par exemple placée en une zone avant du véhicule automobile.

La canalisation froide s'étend avantageusement entre un organe de détente et un compresseur que comprend la boucle de climatisation.

La canalisation froide comprend avantageusement une portion qui est comprise entre le compresseur et un tablier que comporte le véhicule automobile.

La surface de contact est préférentiellement contigüe à la portion de la canalisation froide.

De préférence, la portion est agencée indifféremment en une enveloppe d'une face externe de la cartouche de démarrage, en spires radiales d'enroulement autour de la face externe ou en spires longitudinales d'enroulement autour de la face externe.

De préférence encore, la cartouche de démarrage est reliée à un injecteur d'ammoniac à l'intérieur d'une ligne d'échappement que comprend le véhicule automobile, par l'intermédiaire d'une canalisation qui est pourvue d'un système de dosage d'ammoniac à délivrer.

Le système de dosage est par exemple placé sous le compartiment moteur.

Le système de dosage est par exemple encore placé en zone avant du véhicule automobile.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique en coupe longitudinale d'un véhicule automobile de la présente invention.
- Les figures 2 à 4 sont des vues schématiques de variantes respectives de réalisation d'une cartouche de démarrage équipant le véhicule automobile illustré sur la figure précédente.
- La figure 5 illustre une masse rechargée en ammoniac à l'intérieur des cartouches de démarrage illustrées sur les figures 2 à 4, à diverses températures des cartouches de démarrage.

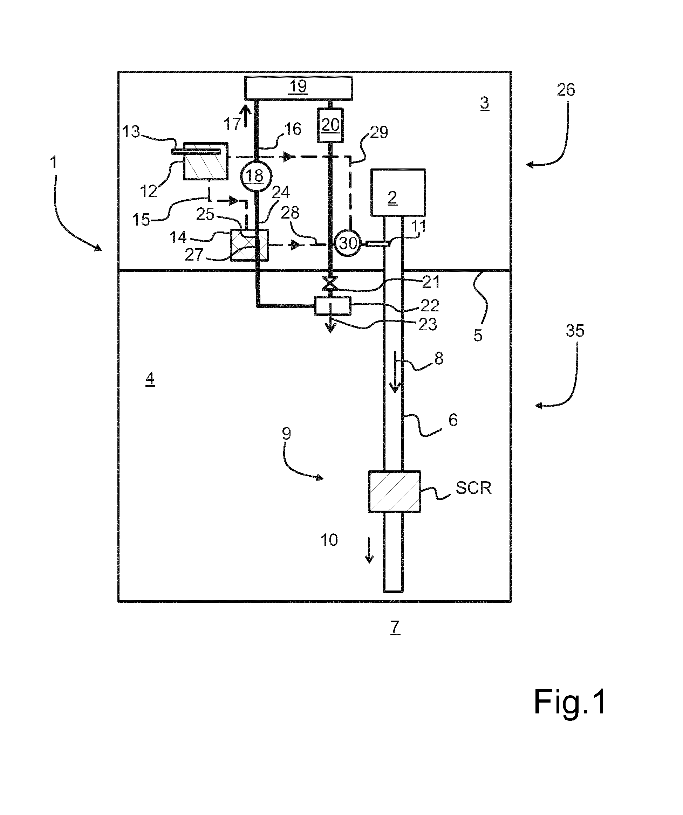

Sur la figure 1, un véhicule automobile 1 de la présente invention est équipé d'un moteur à combustion interne 2 pour permettre son déplacement. Le moteur à combustion interne 2 est logé à l'intérieur d'un compartiment moteur 3 que comprend le véhicule automobile 1. Ce dernier comprend également un compartiment habitacle 4 à l'intérieur duquel prend place au moins un utilisateur du véhicule automobile 1. Le compartiment moteur 3 et le compartiment habitacle 4 sont séparés l'un de l'autre par un tablier 5. Le tablier 5 constitue une séparation entre une zone avant 26 du véhicule automobile et une zone arrière 35 du véhicule automobile 1, la zone avant 26 étant formée d'une zone frontale du véhicule automobile 1 qui précède la zone arrière 35 du véhicule automobile 1 lorsque ce dernier se déplace en marche avant.

Le moteur à combustion interne 2 est équipé d'une ligne d'échappement 6 pour évacuer vers un environnement extérieur 7 des gaz d'échappement 8 produits par le moteur à combustion interne 2. Les gaz d'échappement 8 comprennent des oxydes d'azote NOₓ (x étant égal à 1, 2 ou 3) qu'il est souhaitable de ne pas rejeter dans l'environnement extérieur 7. A cet effet, le véhicule automobile 1 est équipé d'un dispositif 9 de post-traitement des oxydes d'azote qui consiste à réduire les oxydes d'azote préalablement à leur rejet vers l'environnement extérieur 7. Le dispositif 9 comprend un catalyseur de réduction SCR qui équipe la ligne d'échappement 6. Le catalyseur de réduction SCR est le siège de la réaction de réduction des oxydes d'azote. Une telle réaction nécessite un apport d'un agent réducteur, tel que l'ammoniac, à l'intérieur de la ligne d'échappement 6 en amont du catalyseur de réduction SCR selon un sens d'écoulement 10 des gaz d'échappement 8 à l'intérieur de la ligne d'échappement 6. A cet effet le dispositif 9 comprend un injecteur 11 qui est apte à délivrer l'ammoniac à l'intérieur de la ligne d'échappement 6. L'injecteur 11 est situé sur la ligne d'échappement 6 entre le moteur à combustion interne 2 el le catalyseur de réduction SCR.

L'ammoniac est stocké à l'intérieur d'un composé ammoniac, tel qu'un sel ou analogue, qui est contenu à l'intérieur d'au moins une cartouche de stockage 12. Préférentiellement, le véhicule automobile 1 est équipé d'une pluralité de cartouches de stockage 12. L'ammoniac est libéré depuis le composé ammoniaqué à partir d'un chauffage de la cartouche de stockage 12, notamment par l'intermédiaire d'une résistance électrique 13 équipant cette dernière. La cartouche de stockage 12 est en relation avec l'injecteur 11 par l'intermédiaire d'une conduite d'approvisionnement 29 qui est pourvue d'un système de dosage 30 d'une quantité nécessaire d'ammoniac à délivrer à l'intérieur de la ligne d'échappement 6.. Le véhicule automobile 1 est également équipé d'une cartouche de démarrage 14, semblable à la cartouche de stockage 12, mais de dimension plus petite que cette dernière, ce qui facilite une rapidité de mise en oeuvre de la réaction de désorption d'ammoniac depuis le composé ammoniaqué que la cartouche de démarrage 14 contient également. La cartouche de démarrage 14 est mise en oeuvre préférentiellement au démarrage du véhicule automobile 1 afin de libérer le plus tôt possible de l'ammoniac à l'intérieur de la ligne d'échappement 6. La réaction de désorption de l'ammoniac étant une réaction rapide, les gaz d'échappement 8 sont rapidement dépourvus d'oxydes d'azote.

Pour recharger la cartouche de démarrage 14, la cartouche de stockage 12 est chauffée par l'intermédiaire de la résistance électrique 13, ce qui libère de l'ammoniac qui est véhiculé par l'intermédiaire d'un canal d'approvisionnement 15 à la cartouche de démarrage 14 pour y être adsorbé. Une telle réaction d'adsorption est exothermique et lente. Il est donc souhaitable de refroidir la cartouche de démarrage 14.

Le véhicule automobile 1 de la présente invention est également équipé d'une boucle de climatisation 16 pour refroidir un air contenu à l'intérieur du compartiment habitacle 4 du véhicule automobile 1. A titre d'exemple non limitatif, la boucle de climatisation 16 comprend successivement, selon un sens de circulation 17 du fluide réfrigérant à l'intérieur de la boucle de climatisation16 , un compresseur 18 pour comprimer un fluide réfrigérant circulant à l'intérieur de la boucle de climatisation 16, puis un condenseur 19 à l'intérieur duquel le fluide réfrigérant se condense en libérant de la chaleur, puis un filtre 20 pour recueillir un reliquat de fluide réfrigérant à l'état liquide, puis un organe de détente 21 à l'intérieur duquel le fluide réfrigérant subit une détente, puis un évaporateur 22 à l'intérieur duquel le fluide réfrigérant capte des calories à un flux d'air 23 qui travers l'évaporateur 22. Le flux d'air 23 est ainsi refroidit préalablement à son admission à l'intérieur du compartiment habitacle 4. La boucle de climatisation 16 comprend une canalisation froide 24 qui s'étend entre l'organe de détente 21 et le compresseur 18, et à l'intérieur de laquelle le fluide réfrigérant circule à basse température.

Selon la présente invention, la cartouche de démarrage 14 comprend une surface de contact 25 avec la canalisation froide 24, de telle sorte que la cartouche de démarrage 14 est refroidie par le fluide réfrigérant circulant à l'intérieur de la canalisation froide 24, pour permettre une meilleure adsorption d'ammoniac par le composé ammoniaqué contenu à l'intérieur de la cartouche de démarrage 14.

Dans le cas courant où la boucle de climatisation 16 est située à en zone avant 26 du véhicule automobile 1, la cartouche de démarrage 14 est également située en zone avant 26 du véhicule automobile 1, préférentiellement sous le compartiment moteur 3 de ce dernier. Dans ce cas-là, la cartouche de démarrage 14 est placée au contact d'une portion 27 froide de la canalisation froide 24, ladite portion 27 s'étendant entre le tablier 5 et le compresseur 18.

Une canalisation 28 d'approvisionnement en ammoniac s'étend entre la cartouche de démarrage 14 et ledit système de dosage 30. Le système de dosage 30 est préférentiellement déporté en zone avant 26 du véhicule automobile 1, en étant notamment situé sous le compartiment moteur 3 du véhicule automobile 1.

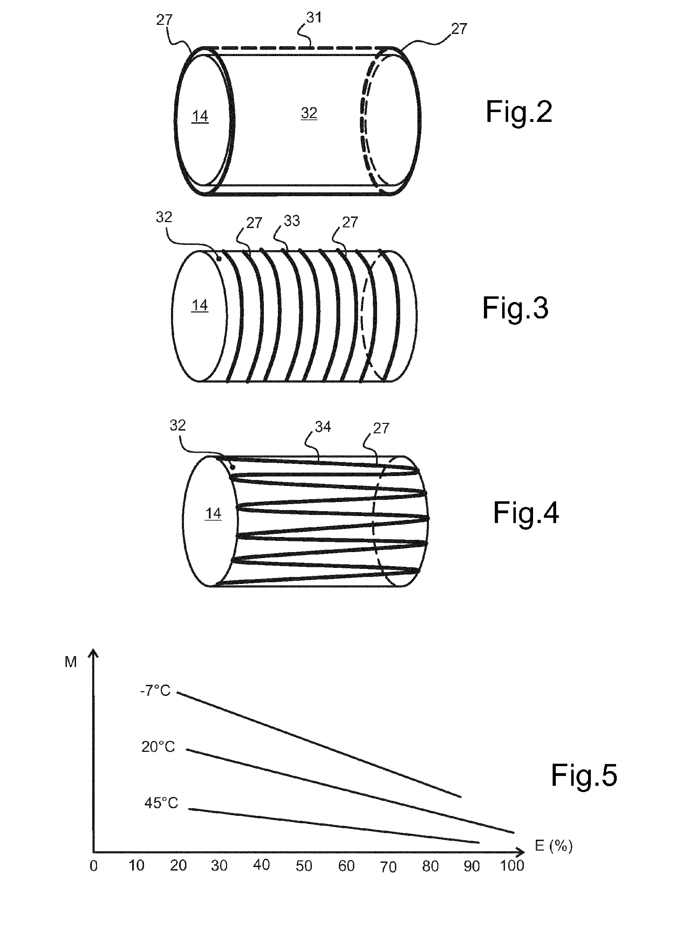

Sur les figures 2 à 4, et selon diverses variantes respectives de réalisation de la portion 27 de canalisation froide 24, la portion 27 constitue une enveloppe 31 de la cartouche de démarrage 14 en recouvrant quasiment totalement une face externe 32 de la cartouche de démarrage 14. Selon une autre variante de réalisation, la portion 27 de canalisation froide 24 est ménagée selon des spires radiales 33 entourant la face externe 32 de la cartouche de démarrage 14. Selon une autre variante de réalisation, la portion 27 de la canalisation froide 24 est constituée de spires longitudinales 34 axialement étendues le long de la surface externe 32 de la cartouche de démarrage 14.

En se reportant sur la figure 5 qui illustre une masse rechargée M d'ammoniac pour la cartouche de démarrage 14 en fonction d'un état E de chargement de la cartouche de démarrage 14 selon trois températures distinctes ( -7°C, 20°C et 45°C) de la cartouche de démarrage 14, il est notab le que plus la température est basse, meilleure est la masse M rechargée.

L'ensemble des dispositions de la présente invention est tel que la cartouche de démarrage 14 est portée à une température la plus basse possible pour faciliter une réaction d'absorption de l'ammoniac, en vue d'accélérer une recharge en ammoniac de la cartouche de démarrage 14. Il en découle notamment que lors de trajets courts du véhicule automobile, la cartouche de démarrage 14 est susceptible d'être rechargée efficacement par la cartouche de stockage 12, ce qui évite un vidage complet de la cartouche de démarrage 14. Le refroidissement de la cartouche de démarrage 14 est réalisé à moindre frais en utilisant une énergie frigorifique disponible à bord du véhicule automobile 1, sans que ce dernier soit notablement modifié. De plus, la cartouche de démarrage 14 étant refroidie, un temps de chauffe de la cartouche de stockage 12 est réduit en raison d'un meilleur rendement de la réaction d'adsorption, ce qui permet une consommation électrique moindre par la résistance électrique 13. Enfin, un tel véhicule automobile 1 est peu polluant en raison d'une augmentation d'occurrences des phases de recharge.

## Revendications

1. Véhicule automobile (1) équipé d'une boucle de climatisation (6) et d'une cartouche de démarrage (14) constitutive d'un dispositif (9) de post-traitement de gaz d'échappement (8), **caractérisé en ce que** la cartouche de démarrage (14) comporte une surface de contact (25) avec une canalisation froide (24) constitutive de la boucle de climatisation (6).

2. Véhicule automobile (1) selon la revendication précédente, **caractérisé en ce que** la cartouche de démarrage (14) est placée sous un compartiment moteur (4) du véhicule automobile (1).

3. Véhicule automobile (1) selon l'une quelconque des revendications précédentes, **caractérisé en ce que** la cartouche de démarrage (14) est placée en une zone avant (26) du véhicule automobile (1).

4. Véhicule automobile (1) selon l'une quelconque des revendications précédentes, **caractérisé en ce que** la canalisation froide (24) s'étend entre un organe de détente (21) et un compresseur (18) que comprend la boucle de climatisation (6).

5. Véhicule automobile (1) selon la revendication 4, **caractérisé en ce que** la canalisation froide (24) comprend une portion (27) qui est comprise entre le compresseur (24) et un tablier (5) que comporte le véhicule automobile (1)

6. Véhicule automobile (1) selon la revendication 5, **caractérisé en ce que** la surface de contact (25) est contigüe à la portion (27) de la canalisation froide (24).

7. Véhicule automobile (1) selon l'une quelconque des revendications 5 et 6, **caractérisé en ce que** la portion (27) est agencée indifféremment en une enveloppe (31) d'une face externe (32) de la cartouche de démarrage (14), en spires radiales (33) d'enroulement autour de la face externe (32) ou en spires longitudinales (34) d'enroulement autour de la face externe (32).

8. Véhicule automobile (1) selon l'une quelconque des revendications précédentes, **caractérisé en ce que** la cartouche de démarrage (14) est reliée à un injecteur (11) d'ammoniac à l'intérieur d'une ligne d'échappement (6) que comprend le véhicule automobile (1), par l'intermédiaire d'une canalisation (28) qui est pourvue d'un système de dosage (30) d'ammoniac à délivrer.

9. Véhicule automobile (1) selon les revendications 2 et 8, **caractérisé en ce que** le système de dosage (30) est placé sous le compartiment moteur (4).

10. Véhicule automobile (1) selon les revendications 3 et 8, **caractérisé en ce que** le système de dosage (30) est placé en zone avant (26) du véhicule automobile (1).
